# EUROPEAN PATENT APPLICATION

(11) **EP 4 763 951 A1**
(43) Date of publication of application: **24.06.2026**
(21) Application number: 24307212.1
(22) Date of filing: 19.12.2024
(51) Int. Cl.: C10G 11/18, B01D 45/06, B01D 45/08, B01J 8/00, B01J 8/18

(54) **RISER REACTOR SEPARATION SYSTEM AND RELATED METHOD**

(71) Applicant: Technip Energies France, 92741 Nanterre Cedex (FR)
(72) Inventor: MARCHANT, Paul, 92741 Nanterre Cedex (FR); SINGH, Raj Kanwar, 92741 Nanterre Cedex (FR); GOLCZYNSKI, Scott, 92741 Nanterre Cedex (FR)
(74) Representative: Edson, Russell Gregory

(57) **Abstract**

A riser reactor separation system for separating catalyst particles from hydrocarbon vapors may include a separation chamber, a hydrocarbon vapor collecting chamber, a hydrocarbon vapor outlet, and a dipleg extending downwardly towards a catalyst receiving volume. In some implementations the system may include a baffle spaced apart from and extending along a dipleg outer wall, at least partially separating the dipleg into an outer channel and an inner channel. In some implementations the separation chamber may have side walls that extend substantially parallel relative to one another. Riser reactor separation systems and related methods described herein may provide for greater separation efficiency of catalyst particles from hydrocarbon vapors.

## Description

### TECHNICAL FIELD

Riser reactor systems and related methods, and more particularly separation systems and related methods for separating catalyst particles from hydrocarbon vapors in a mixture of catalyst particles and hydrocarbon vapors flowing from a riser reactor.

### BACKGROUND

A riser reactor is a type of catalytic cracking unit in which a mixture of heated catalyst particles and hydrocarbons flow upwardly through a riser reactor (optionally assisted by a lift gas). In the riser reactor the heat and activity of the catalyst vaporizes and cracks (breaks down) the relatively long chain hydrocarbons into relatively short chain hydrocarbons. The catalyst particles and hydrocarbon vapors are then separated, with the hydrocarbon vapors leaving the reactor and the catalyst particles collected for regeneration and reuse.

### SUMMARY

In one example a riser reactor separation system for separating catalyst particles from hydrocarbon vapors includes a separation chamber, a hydrocarbon vapor collection chamber, a hydrocarbon vapor outlet, a dipleg, and a baffle. In this example the separation chamber extends outwardly from and in fluid communication with a riser outlet of a riser reactor. The hydrocarbon vapor collecting chamber is in fluid communication with the separation chamber. The hydrocarbon vapor outlet is in fluid communication with the hydrocarbon vapor collecting chamber. The dipleg extends downwardly from the separation chamber towards a catalyst receiving volume, the dipleg having a dipleg outer wall. The baffle is spaced apart from and extends along the dipleg outer wall, at least partially separating the dipleg into an outer channel and an inner channel.

In some implementations the baffle has an upper end located in the separation chamber, the separation chamber has an outer wall, and the outer wall of the separation chamber and the outer channel of the dipleg define a continuous flow path.

In some implementations the system includes a deflector located in the separation chamber and extending outwardly away from the riser outlet, the upper end of the baffle being lower than the deflector.

In some implementations the system includes an opening fluidly connecting the separation chamber and the hydrocarbon vapor collecting chamber, the upper end of the baffle being lower than the opening.

In some implementations the deflector extends outwardly away from the riser outlet to an outermost edge of the deflector, and the upper end of the baffle is spaced outward relative to the outermost edge of the deflector.

In some implementations the dipleg defines a length extending downwardly from the separation chamber towards the catalyst receiving volume, and the baffle extends along at least 80% of the length of the dipleg.

In some implementations the dipleg has an inner wall and an outer wall, the outer wall of the dipleg is continuous with the outer wall of the separation chamber, and the baffle is located closer to the outer wall of the dipleg than the inner wall.

In some implementations the baffle is parallel to the outer wall.

In some implementations the dipleg has a lower end, and the riser separation system includes a guard at least partially obstructing the lower end of the dipleg.

In some implementations the separation chamber has an outer wall, a first side wall extending to the outer wall, and a second side wall extending to the outer wall, and the first and second side walls of the separation chamber extend substantially parallel relative to one another.

In some implementations the baffle includes one or more openings between the outer and inner chambers.

In some implementations the openings of the baffle may be holes or slots extending through the baffle.

In another example a riser separation system for separating catalyst particles from hydrocarbon vapors includes a separation chamber, a hydrocarbon vapor collecting chamber, and a dipleg. The separation chamber extends outwardly from a riser outlet of a riser reactor. The hydrocarbon vapor collecting chamber is in fluid communication with the separation chamber, and the hydrocarbon vapor collecting chamber in fluid communication with a hydrocarbon vapor outlet. The dipleg extends downwardly from the separation chamber towards a catalyst receiving volume. The separation chamber includes an outer wall, a first side wall extending to the outer wall, and a second side wall extending to the outer wall. In this example the first and second side walls of the separation chamber extend substantially parallel relative to one another.

In some implementations the first and second side walls extend to the outer wall along an axis and are separated by a width, in which the width varies by less than 10% along the axis.

In some implementations the first and second side walls are straight, and the first and second side walls do not diverge or converge by more than five degrees.

In some implementations the riser reactor extends upwardly along a central axis, the first side wall of the separation chamber lies in a first plane, the second side wall of the separation chamber lies in a second plane, and the central axis is located between and does not intersect the first and second planes.

In some implementations the system includes a baffle spaced apart from and extending along an outer wall of the dipleg, the baffle at least partially separating the dipleg into an outer channel and an inner channel.

In another example a method of separating catalyst particles from hydrocarbon vapors includes flowing a mixture including hydrocarbon vapors and catalyst particles to a riser reactor outlet. The method further includes flowing the mixture including hydrocarbon vapors and catalyst particles from the riser reactor outlet into a separation chamber to at least partially separate the catalyst particles from the hydrocarbon vapors. At least some of the hydrocarbon vapors flow from the separation chamber into a vapor collecting chamber. At least some of the catalyst particles flow along a curved outer wall of the separation chamber and downwardly into an outer channel of a dipleg, the outer channel of the dipleg at least partially separated from an inner channel of the dipleg by a baffle.

In some implementations the catalyst particles flow through the outer channel of the dipleg with a catalyst flux between 50 and 200 pounds per square foot per second.

In some implementations the catalyst particles flow through the outer channel of the dipleg with a catalyst flux between 100 and 150 pounds per square foot per second.

In some implementations the mixture including hydrocarbon vapors and catalyst particles flows in the separation chamber towards the curved outer wall of the separation chamber at a substantially constant velocity between two substantially parallel side walls of the separation chamber.

In some implementations the mixture including hydrocarbon vapors and catalyst particles flows from the riser reactor outlet towards the curved outer wall of the separation chamber at a substantially constant velocity that varies by less than 5%.

### BRIEF DESCRIPTION OF FIGURES

FIG. 1 shows an example of a riser reactor separation system.
FIG. 2 shows the riser reactor separation system of FIG. 1 with the baffles inside the diplegs shown in the figure.
FIGS. 3-5 schematically show another example of a riser reactor separation system.
FIG. 6 shows another example of a riser reactor separation system including splash guards at the lower ends of the diplegs.
FIG. 7 shows another example of a riser reactor separation system including separation chamber side walls that are substantially parallel to one another.
FIG. 8-10 schematically show additional examples of riser reactor separation systems including separation chamber side walls that are substantially parallel to one another.
FIG. 11 shows an example of a portion of a riser reactor separation system with a baffle that is parallel to an outer wall of a separation chamber.
FIG. 12 shows an example of a portion of a riser reactor separation system with a baffle that extends below the bottom of a dipleg.
FIG. 13 schematically shows another example of a riser reactor separation system including separation chamber side walls that are substantially parallel to one another.
FIG. 14 shows an example method of separating catalyst particles from hydrocarbon vapors in a riser reactor.
FIGS. 15 and 16 show additional examples of riser reactor separation systems.

### DETAILED DESCRIPTION

Described herein are examples of riser reactor separation systems and related methods for separating catalyst particles from hydrocarbon vapors. The riser reactor separation system may include a separation chamber extending outwardly from and in fluid communication with a riser outlet of a riser reactor. A hydrocarbon vapor collecting chamber may be in fluid communication with the separation chamber, with a hydrocarbon outlet in fluid communication with the hydrocarbon vapor collecting chamber. A dipleg may extend downwardly from the separation chamber towards a catalyst receiving volume.

The riser reactor separation system may function to separate catalyst particles out of the mixture of catalyst particles and hydrocarbon vapors flowing from the riser outlet of the riser reactor. In at least some implementations, the system may be configured to quickly separate the hydrocarbon vapor from the catalyst particles after passing from the riser outlet to reduce the possibility of any further catalytic activity taking place after the mixture exits the riser reactor. In at least some implementations, the system may be configured to improve on the amount of catalyst particles removed from the hydrocarbon vapor flow and reducing the amount of hydrocarbon vapors that are entrained by the catalyst particles through the dipleg and into the catalyst receiving volume. In at least some implementations, it may be desirable to minimize the amount of catalyst particles remaining in the hydrocarbon vapor flow exiting the reactor system via the hydrocarbon outlet, as excess catalyst particles may erode or otherwise damage downstream components of an industrial plant.

The separation chamber of the riser reactor separation system may separate the catalyst particles out of the mixture flowing from the riser outlet using a combination of inertial and centrifugal forces. The separation chamber may include an outer wall and a deflector. In some implementations both the outer wall and the deflector are curved such that as the mixture of catalyst particles and hydrocarbon vapors flows from the riser outlet and through the separation chamber, inertial and centrifugal forces will result in the catalyst particles and hydrocarbon vapors separating into separate flows, with the catalyst particles mostly located in a flow along the outer wall of the separation chamber. In at least some implementations the goal of this separation will be for most of the catalyst particles to flow along the curved outer wall of the separation chamber, down the dipleg, and into the catalyst receiving volume, and for the hydrocarbon vapors to be directed in a separate flow or flows that are directed to the hydrocarbon vapor collecting chamber that is in fluid communication with the separation chamber (e.g. via an opening underneath the separation chamber deflector).

In the examples described herein the riser reactor separation system and related methods may incorporate one or more features to improve the separation efficiency of catalyst particles from hydrocarbon vapors.

In some examples, the systems and methods may include a baffle spaced apart from and extending along the dipleg outer wall, at least partially separating the dipleg into an outer channel and an inner channel. The baffle may function as a partition in the dipleg that helps prevent separated catalyst particles from re-entraining back up the dipleg and thereby improving separation efficiency. In other examples, the systems and methods may include a separation chamber in which the side walls of the separation chamber extend substantially parallel relative to one another. The substantially parallel side walls may facilitate maintaining a constant velocity of the hydrocarbon gas as it travels from the riser outlet into the separation chamber, which may also or alternatively improve separation efficiency. In some examples, the systems and methods may incorporate both a baffle and substantially parallel side walls. In other examples, the systems and methods may incorporate just one of these features.

Regarding the baffle, in some implementations the baffle has an upper end located in the separation chamber. The upper end may be located in the separation chamber where the catalyst particles and hydrocarbon vapors have separated (or mostly separated) into separate flows. In at least some implementations the upper end of the baffle may be lower than the deflector and lower than the opening fluidly connecting the separation chamber to the hydrocarbon vapor collecting chamber. The upper end of the baffle may also be spaced outward relative to the outermost edge of the deflector. In this manner, the baffle and separation chamber may facilitate capturing the flow of catalyst particles along the outer wall of the separation chamber so that the catalyst particles may be directed downwardly through the dipleg and into the catalyst receiving volume while still providing for a flow path or paths for the separated hydrocarbon vapors into the hydrocarbon vapor collection chamber. The location of the upper end of the baffle may be chosen such that the initial gas-solid separation occurring in the separation chamber is preserved, with catalyst particles unable to be dragged away from the outer wall of the separation chamber and outer wall of the dipleg by the hydrocarbon vapors turning around the deflector in the separation chamber.

Furthermore, in at least some implementations, the baffle may extend along at least 80% of the length of the dipleg with a substantially constant spacing between the between the baffle and an outer wall of the dipleg. The baffle may be located closer to the outer wall of the dipleg than to an inner wall of the dipleg. The baffle may be located to provide an outer channel in the dipleg that, during operation, has a catalyst flux of between 50 and 200 pounds per square foot per second, or between 100 and 150 pounds per square foot per second. In at least some implementations, the catalyst flux may be at a level that reduces if not prevents hydrocarbon vapors from flowing upwardly through the outer channel and potentially re-entraining catalyst particles. Instead, any hydrocarbon vapors flowing down the outer channel of the dipleg may flow back up along the inner channel of the dipleg. The catalyst flux may also be at a level that reduces if not prevents other vapors (e.g. stripper gases potentially entering the dipleg from the catalyst receiving volume) from flowing upwardly through the outer channel and potentially re-entraining catalyst particles.

The baffle may be located to partition the dipleg into an outer channel and an inner channel with most if not all of the catalyst particle flow located in the outer channel. In some implementations the catalyst flux in the inner channel may be 5% or less than the catalyst flux in the outer channel, 2.5% or less than the catalyst flux in the outer channel, 1% or less than the catalyst flux in the outer channel, or 0.5% or less than the catalyst flux in the outer channel.

In at least some implementations, the addition of baffles configured in the manner described above may increase the catalyst particle separation efficiency of a riser reactor separation system by 10-15% based on computational fluid dynamic modeling and cold flow testing.

Regarding the substantially parallel side walls of the separation chamber, in some implementations, the side walls may be separated by a width that varies by less than 10%. In some implementations, the side walls may be separated by a width that varies by an amount in the range of 0-15%. In some implementations, the side walls may be straight and may be oriented such that the side walls do not diverge or converge by more than five degrees. Furthermore, in at least some implementations, the side walls of the separation chamber lie in planes that do not intersect with a central axis of the riser reactor.

As noted above, the configuration of the substantially parallel side walls of the separation chamber may facilitate maintaining a constant velocity of the hydrocarbon gas as it travels from the riser outlet into the separation chamber, which may additionally improve separation efficiency in conjunction with or separate from the baffle discussed above. Separation chambers that do not have substantially parallel side walls (e.g. separation chambers with side walls that that diverge to a significant degree) may allow decreases in flow velocity in the separation chamber as the cross-sectional area of the chamber expands, which may result in catalyst particles not remaining biased against the outer wall of the separation chamber and potentially remaining entrained with the hydrocarbon vapors. Substantially parallel side walls in the separation chamber facilitate maintaining a constant flow velocity such that catalyst particles will be biased against the outer wall of the separation chamber.

In at least some implementations, the inclusion of substantially parallel side walls in the separation chamber (as opposed to side walls that substantially diverge) may increase the catalyst particle separation efficiency of a riser reactor separation system by 5-15% based on computational fluid dynamic modeling and cold flow testing.

The riser reactor separation system may function to separate catalyst particles from the mixture of catalyst particles and hydrocarbon vapors flowing from the riser outlet of the riser reactor such that most of the catalyst particles from the mixture (e.g. at least 90% by weight, at least 95% by weight, or up to 99% by weight of the catalyst particles from the mixture) are directed to the catalyst receiving volume, and such that the a hydrocarbon vapor flow is output via the hydrocarbon vapor outlet that is substantially free of catalyst particles (e.g. less than 10% by weight, or less than 5% by weight of the catalyst particles from the mixture).

The following is a discussion of the systems and methods illustrated in the figures and are provided by way of example only and are non-limiting on the scope of the claimed inventions.

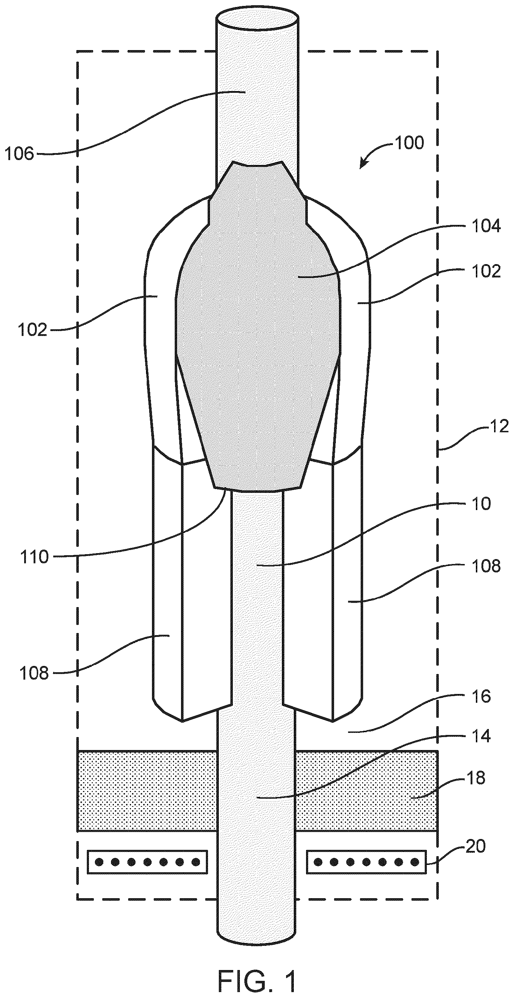

FIG. 1 shows an example of a riser reactor separation system 100 for separating catalyst particles from hydrocarbon vapors. The riser reactor separation system 100 in this example includes two separation chambers 102, two hydrocarbon vapor collecting chambers 104 (only one of which is visible in FIG. 1), a hydrocarbon vapor outlet 106, and two diplegs 108.

In other implementations the riser reactor separation system may include different numbers of separation chambers, hydrocarbon vapor collecting chambers, hydrocarbon vapor outlets, and diplegs. For instance, there may be only a single separation chamber and a single hydrocarbon vapor collecting chamber in the riser reactor separation system, or there may be 3, 4, 5, or other numbers of separation chambers and hydrocarbon vapor collecting chambers. In various implementations the riser reactor separation system may include the same number of separation chambers and hydrocarbon vapor collecting chambers, or a different number of each. Additionally, in FIG. 1, each separation chamber 102 is associated with a dipleg 108. In other implementations the separation chambers may share a common dipleg or the diplegs may be provided in other numbers.

The riser reactor separation system 100 of FIG. 1 functions to separate catalyst particles out of a mixture of catalyst particles and hydrocarbon vapors flowing from a riser reactor 10 located in a reaction vessel 12.

The riser reactor 10 may receive at a lower portion 14 hot regenerated catalyst particles from a regenerator, an atomized hydrocarbon feedstocks, steam, and (optionally) a lift gas. The riser reactor 10 has an elongate, upwardly extending form, and may have a diameter that ranges from about 1 inch to about 10 feet and larger, and in some implementations from about 3 feet to about 6 feet.

In some implementations the riser reactor 10 may be a fluidized catalytic cracking (FCC) reactor. In the riser reactor 10, the hot catalyst particles come into contact with the atomized hydrocarbon feedstock causing the hydrocarbon feedstock to vaporize and crack into different hydrocarbon species. During the process solid coke products form on the catalyst particles. In some implementations, the riser reactor 10 may be used to convert high-boiling point, high molecular weight hydrocarbon fractions of petroleum crude oils into products such as gasoline, olefinic gases, and other hydrocarbon products. In some implementations, the catalyst particles may be zeolite particles that act as a fluid when aerated and flowed upwardly through riser reactor 10.

The separation chambers 102 extend outwardly from and are in fluid communication with a riser outlet (not visible in FIG. 1) of the riser reactor 10. The separation chambers 102 separate the catalyst particles out of the mixture of catalyst particles and hydrocarbon vapors flowing from the riser reactor 10. As discussed in greater detail below, the separation chambers 102 separate the catalyst particles out of the mixture of catalyst particles and hydrocarbon vapors flowing from the riser reactor 10 by flowing the mixture through a curved flow path, with inertial and centrifugal forces causing the catalyst particles and hydrocarbon vapors to separate into different flows. It should be noted that "separate" in this context does not mean that the hydrocarbon vapors and catalyst particles are 100% separated from one another. The flow of catalyst particles may still include some hydrocarbon vapors and the flow of hydrocarbon vapors may still include some catalyst particles.

The diplegs 108 extend downwardly from the separation chambers towards a catalyst receiving volume 16 located below the diplegs 108 in the reaction vessel 12. Catalyst particles flow from the separation chambers 102 down into the diplegs 108 and to the catalyst receiving volume 16 where they collect in catalyst bed 18. In at least some implementations the diplegs 108 may also allow a stripping gas (discussed further below) and/or hydrocarbon vapors to flow back up the dipleg 108 and back into the separation chamber 102.

The hydrocarbon vapor collecting chambers 104 are in fluid communication with the separation chambers 102 such that they may receive hydrocarbon vapors and other gases (e.g. stripping gas and/or lift gas) from the separation chambers 102 through openings between the two types of chambers as discussed further below. The hydrocarbon vapor collecting chambers 104 may also include windows in their lower ends (e.g. at 110) to allow stripping gas and/or hydrocarbon vapors to enter the hydrocarbon vapor collecting chambers 104 from a stripping gas injector 20 positioned at the bottom of the catalyst bed 18. The stripping gas may be, for instance, a nitrogen, steam, fuel, or light hydrocarbon vapor gas that is used to encourage desorption of liquid or gaseous hydrocarbons trapped in the pores or attached on the surface of the catalyst particles in the catalyst bed 18.

The hydrocarbon vapor outlet 106 is in fluid communication with the hydrocarbon vapor collecting chambers 104 (e.g. via openings between hydrocarbon vapor collecting chambers 104 and the hydrocarbon vapor outlet 106), such that hydrocarbon vapor and other gases and any remaining catalyst particles from the hydrocarbon vapor collecting chambers 104 may flow into the hydrocarbon vapor outlet 106. From the hydrocarbon vapor outlet 106 the hydrocarbon vapor and other gases and any remaining catalyst particles may in at least some implementations flow to secondary separator components (now shown) to further remove catalyst particles from the flow and may be flowed out of reaction vessel 12.

### Baffles

In the example of FIG. 1 the riser reactor separation system 100 includes baffles inside the diplegs 108 for resisting separated catalyst particles from re-entraining back up the dipleg 108 and thereby improving separation efficiency.

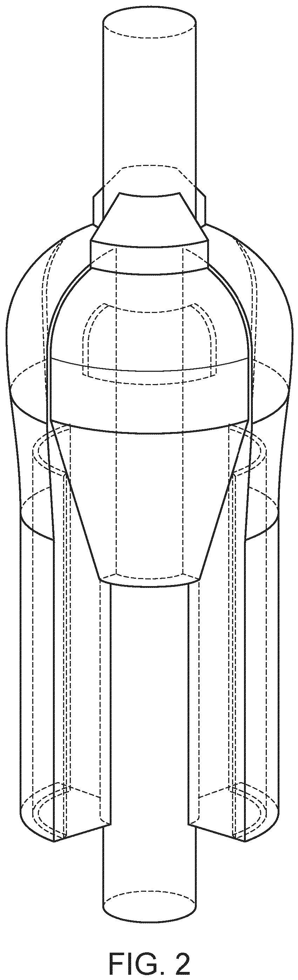

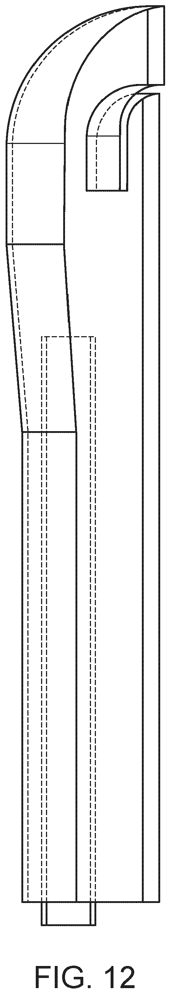

FIG. 2 shows the riser reactor separation system 100 of FIG. 1 with the baffles 112 inside the diplegs 108. As shown in FIG. 2, each baffle 112 is spaced apart from and extends along the dipleg outer wall 114, at least partially separating the dipleg 108 into an outer channel 116 and an inner channel 118. In this example the baffle 112 includes an upper end 120 located in the separation chamber 102. Also in this example, a lower end 122 of the baffle 112 is co-terminus with the lower end 124 of the dipleg 108. In other implementations the lower end of the baffle may extend beyond the lower end of the dipleg. For instance, FIG. 12 shows an example of a baffle 112 lower end 122 extending beyond the lower end 124 of the dipleg 108. In some implementations, the configuration of the baffle 112 (including the relative locations of the lower end 122 of the baffle 112 to the lower end 124 of the dipleg) may be determined based on a desired balance between particle collection efficiency and gas containment efficiency.

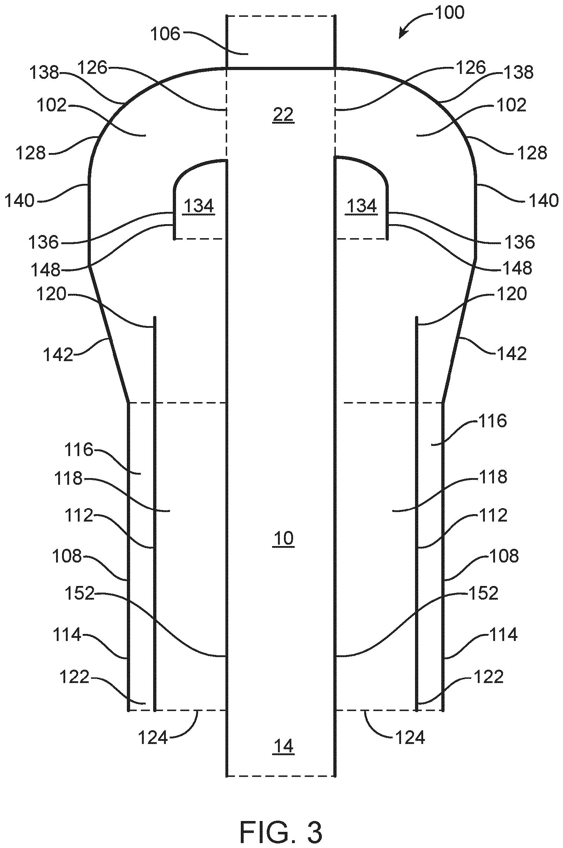

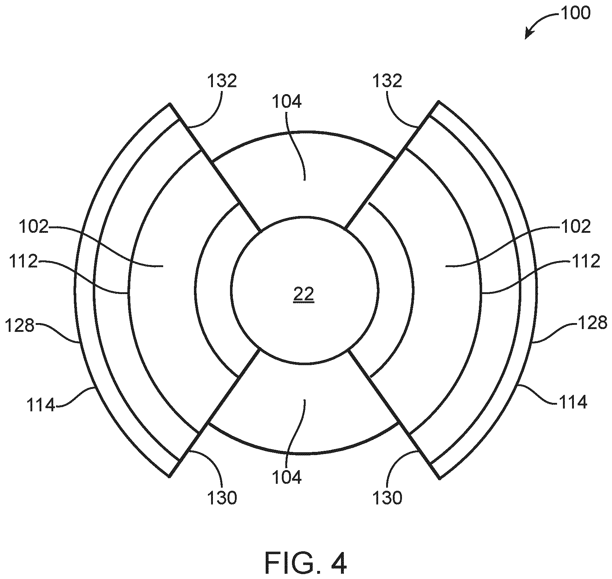

FIGS. 3-5 show a schematic example of a riser reactor separation system 100, further illustrating the relative position of the baffle 112 in the separation chamber 102 and the dipleg 108. FIG. 3 shows a side cross-sectional view of the riser reactor separation system 100 and FIG. 4 shows a top down cross-sectional view of the riser reactor separation system 100.

Like the example of FIGS. 1 and 2, the riser reactor separation system 100 in FIGS. 3-5 includes separation chambers 102 extending outwardly from and in fluid communication with a riser outlet 22 of a riser reactor 10. As shown in FIG. 3, separation chambers 102 are in fluid communication with the riser outlet 22 via openings 126 between the riser outlet 22 and the separation chambers 102. As shown in FIG. 4, the separation chambers 102 each include an outer wall 128, a first side wall 130 extending to the outer wall 128, and a second side wall 132 extending to the outer wall 128. In this example, the first and second side walls 130, 132 also serve as the side walls of the hydrocarbon vapor collecting chambers 104 (see FIG. 4), with the hydrocarbon vapor collecting chambers 104 being in fluid communication with the separation chambers 102 via openings 134 (see FIG. 3) fluidly connecting the separation chambers 102 and the hydrocarbon vapor collecting chambers 104. As shown in FIG. 3, diplegs 108 extend downwardly from the separation chamber 102. The diplegs 108 include outer walls 114 that define continuous flow paths (e.g. uninterrupted surfaces along which catalyst particles may flow) with the outer walls 128 of the separation chambers 102.

The separation chambers 102 separate the catalyst particles out of the mixture of catalyst particles and hydrocarbon vapors flowing from the riser reactor 10 by flowing the mixture through a curved flow path, with inertial and centrifugal forces causing the catalyst particles and hydrocarbon vapors to separate into different flows. In the example of FIGS. 3 and 4, this curved flow path is created by the configuration of the outer wall 128 of the separation chamber 102 and a deflector 136 in the separation chamber 102, which extends outwardly away from the riser outlet 22. As shown in FIG. 3, the outer wall 128 of the separation chambers 102 each include a curved portion 138 that extends outwardly away from and curves downwardly from the riser outlet 22, a first straight portion 140 extending downward from the curved portion 138 and parallel to the riser reactor 10, and a second straight portion 142 extending downwardly from the first straight portion 140 and angled inwardly towards the riser reactor 10. The interior of dipleg 108 joins the interior of the separation chamber 102 where the outer wall 114 of the dipleg 108 meets the second straight portion 142 of the outer wall 128 of the separation chamber 102.

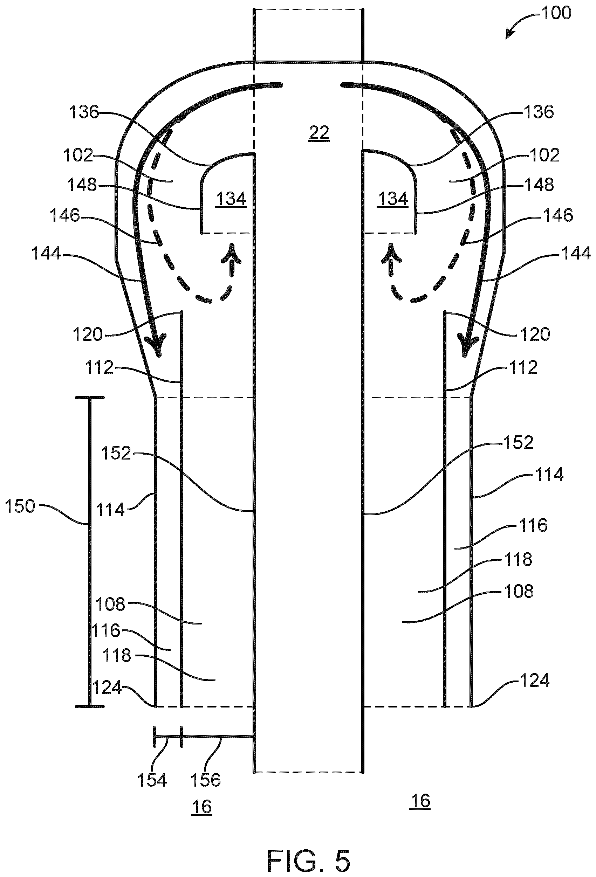

As shown in FIG. 5, as the mixture from the riser outlet 22 flows through the curved flow path in the separation chamber 102, inertial and centrifugal forces will cause the heavier and denser catalyst particles to be biased against the outer wall 128 of the separation chamber 102 along flow path 144 while the hydrocarbon vapors are not so constrained and are able to more readily flow along a flow path 146 into the opening 134 between the separation chamber 102 and the hydrocarbon vapor collecting chamber 104. The outer channel 116 of the dipleg 108 defines a continuous flow path with the outer wall 128 of the separation chamber 102. In other words, catalyst particles flowing along the outer wall 128 of the separation chamber 102 may flow without interruption into the outer channel 116 of the dipleg 108.

As shown in FIGS. 3 and 5, each baffle 112 may be spaced apart from and extend along the dipleg outer wall 114, at least partially separating the diplegs 108 into outer channels 116 and inner channels 118. As shown in FIG. 4, each baffle 112 may have a curvature that is similar to or matches the curvatures of the outer wall 128 of the separation chamber 102 and the outer wall 114 of the dipleg 108. In other implementations, the baffle need not have a curvature that is similar to or matches the curvatures of the outer wall of the separation chamber and the outer wall of the dipleg. For example, without limitation, in some implementations the outer walls of the separation chamber and/or dipleg may have a convex curvature and the baffle may be un-curved or concave.

In the example of FIGS. 3-5, the baffles 112 are located to preserve this separation between the catalyst particles and the hydrocarbon vapor. As shown in FIGS. 3 and 5 the upper end 120 of the baffle 112 may be located in the separation chamber 102. The upper end 120 of the baffle 112 may be lower than the deflector 136, and lower than the opening 134 fluidly connecting the separation chamber 102 and the hydrocarbon vapor collecting chamber 104. As shown in FIGS. 3 and 5, the deflector 136 may extend outwardly away from the riser outlet 22 to an outermost edge 148 of the deflector 136, with the upper end 120 of the baffle 112 being spaced outward relative to the outermost edge 148 of the deflector 136. The baffle 112 shown in FIGS. 3-5 is located to preserve the separation between the catalyst particles and the hydrocarbon vapor caused by the curved flow path of the separation chamber, channeling the separated catalyst particles down the outer channel 116 of the dipleg while still allowing for hydrocarbon vapors to flow to the opening 134 fluidly connecting the separation chamber 102 to the hydrocarbon vapor collecting chamber 104. The location and configuration of the baffle 112 shown in FIGS. 3-5 is not the only location and configuration for a baffle that can accomplish these functions, and other locations and configurations are possible.

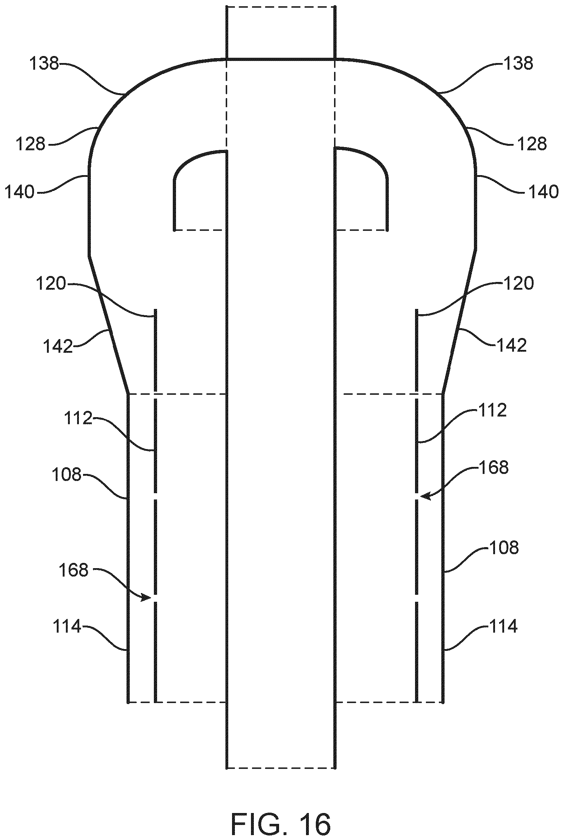

In some implementations the baffle 112 may be a solid barrier extending along the dipleg 108, such that the outer channel 116 and inner channel 118 are completely separated along the length of the baffle 112. In other implementations the baffle 112 may include one or more openings allowing some fluid communication between the outer channel 116 and inner channel 118. For instance, in some examples, the baffle 112 may include perforations allowing hydrocarbon vapors to pass from the outer channel 116 to the inner channel 118 while at the same time preventing catalyst particles from passing from the outer channel 116 to the inner channel 118. In some examples, the baffle 112 may include openings in the form of holes or slots extending through the baffle 112. FIG. 16 shows an example of a baffle 112 including openings 168.

As shown in FIG. 5 the dipleg 108 defines a length 150 extending downwardly from the separation chamber 102 towards the catalyst receiving volume 16 below the lower end 124 of the dipleg 108. The baffle 112 may extend along at least 80% (or at least 90% or at least 95%) of the length 150 of the dipleg 108. As shown in the example of FIG. 12, in some implementations, the baffle 112 may be longer than the length of the dipleg 108 and extend below the lower end 124 of the dipleg 108.

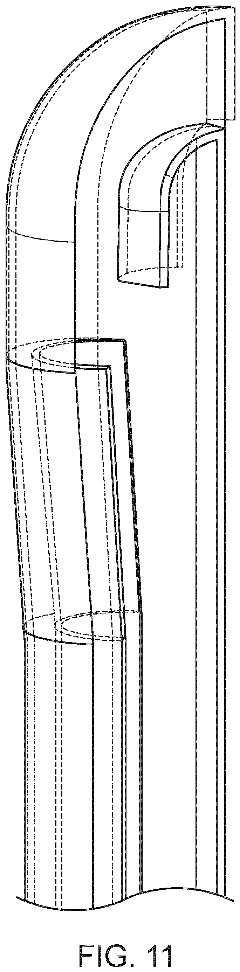

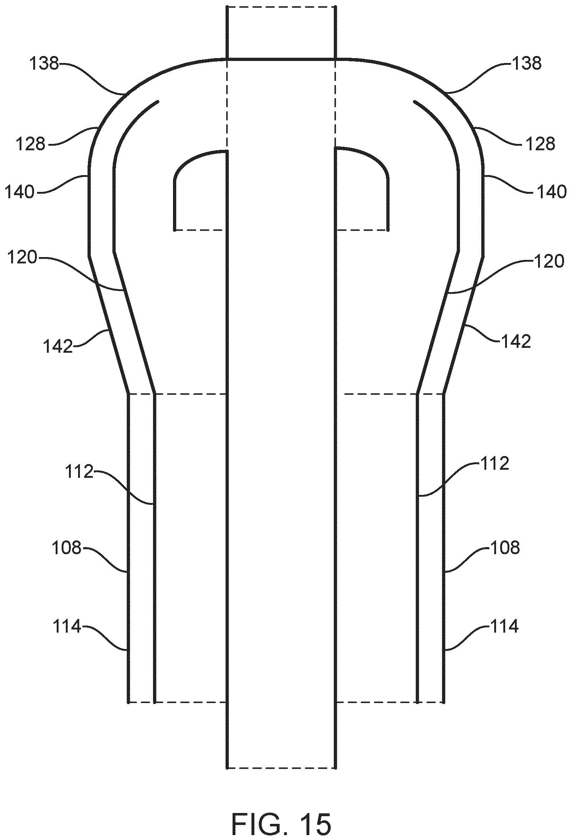

As also shown in FIG. 5 the baffle 112 may be located closer to the outer wall 114 of the dipleg 108 than the inner wall 152 of the dipleg 108. The width 154 separating the dipleg 108 outer wall 114 from the baffle 112 may be smaller than the width 156 separating the inner wall 152 of the dipleg 108 and the baffle 112. As also shown in FIG. 5 the baffle 112 may be parallel to the outer wall 114 of the dipleg 108. FIGS. 11 and 12 also show examples in which the baffle 112 is parallel to the outer wall 114 of the dipleg. In FIG. 11 the baffle 112 is also parallel to the second straight portion 142 of the outer wall 128 of the separation chamber 102. In FIG. 12 the upper end 120 of the baffle 112 diverges from the second straight portion 142 of the outer wall 128 of the separation chamber 102. In some implementations, the baffle 112 of FIG. 11 may further preserve the catalyst particle bias towards the outer wall 128, may create less turbulence in the gas stream as it flows down and around the deflector, and may further improve catalyst separation efficiency. FIG. 15 shows another example of a baffle 112 extends even further into the separation chamber along outer wall 128.

In some implementations the baffle 112 may be configured (e.g. by selecting the location for the upper end 120 of the baffle 112, the spacing of the baffle 112 relative to the outer wall 114 of the dipleg 108 and/or the outer wall 128 of the separation chamber 102, and/or the length of the baffle 112) and the riser reactor separation system 100 may be otherwise configured such that the outer channel 116 of the dipleg 108 has a catalyst flux between 50 and 200 pounds per square foot per second. In some implementations the baffle 112 may be configured (e.g. by selecting the location for the upper end 120 of the baffle 112, the spacing of the baffle 112 relative to the outer wall 114 of the dipleg 108 and/or the outer wall 128 of the separation chamber 102, and/or the length of the baffle 112) and the riser reactor separation system 100 may be otherwise configured such that the outer channel 116 of the dipleg 108 has a catalyst flux between 50 and 200 pounds per square foot per second.

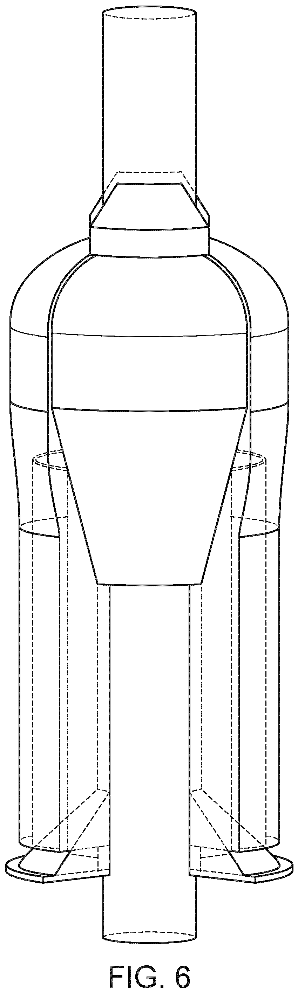

FIG. 6 shows another example of a riser reactor separation system 100. In this example the system also includes a guard 158 at least partially obstructing the lower end 124 of the dipleg 108. The guard 158 may be a splash plate that prevents stripping vapors from entering the dipleg 108 from the catalyst receiving volume, further reducing the possibility of re-entrainment of catalyst particles flowing down the dipleg 108.

### Separation Chamber With Substantially Parallel Side Walls

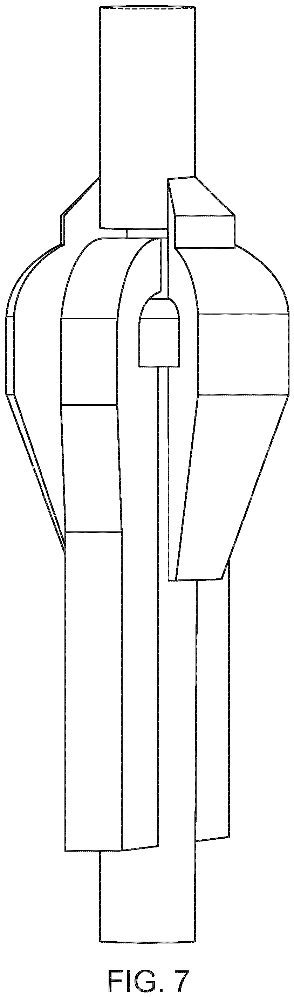

In the examples discussed above the side walls 130, 132 of the separation chamber 102 may diverge as they extend away from the riser outlet 22 to the outer wall 128 of the separation chamber 102. See for example FIG. 4. In other examples the first and second side walls 130, 132 of the separation chamber 102 extend substantially parallel relative to one another. Examples of this are shown in FIGS. 7-10 and 13.

FIG. 7 shows an example of a riser separation system 100 for separating catalyst particles from hydrocarbon vapors. The riser separation system 100 of FIG. 7 includes a separation chamber 102 (in this particular example two separation chambers 102, although only one is visible in FIG. 7) extending outwardly from a riser outlet 22 of a riser reactor 10. A hydrocarbon vapor collecting chamber 104 (in this particular example two hydrocarbon vapor collecting chambers 104) is in fluid communication with the separation chamber 102 via conduit 160. The hydrocarbon vapor collecting chamber 104 is also in fluid communication with a hydrocarbon vapor outlet 106. A dipleg 108 (in this particular example two diplegs 108) extends downwardly from the separation chamber 102 towards a catalyst receiving volume.

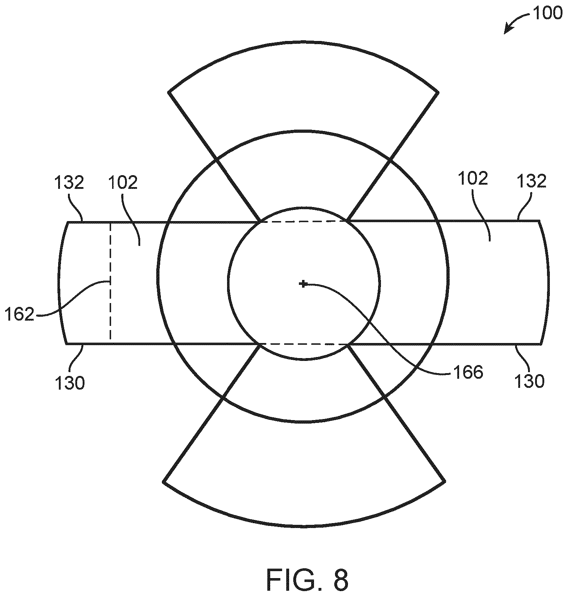

FIG. 8 shows a schematic top-down cross section of the riser reactor separation system 100 of the example in FIG. 7. As can be seen in FIG. 8 the first and second side walls 130, 132 of the separation chamber 102 extend substantially parallel relative to one another. As noted above, the inclusion of substantially parallel side walls 130, 132 in the separation chamber 102 facilitates maintaining a constant flow velocity in separation chamber 102 and improves catalyst particle separation efficiency.

In the example of FIG. 8 the width 162 between the substantially parallel side walls 130, 132 does not vary. In other examples the width between the side walls may vary slightly but the side walls will still be substantially parallel such that a constant flow velocity is maintained in the separation chamber 102. For instance, in some implementations, the first and second side walls may extend to the outer wall along an axis that are separated by a width that varies by less than 5% along the axis. In these or other implementations, the first and second side walls are straight and do not diverge or converge by more than five degrees. In these or other implementations, the first and second side walls lie in planes that do not intersect a central axis of the riser reactor (e.g. central axis 166 shown in FIG. 8).

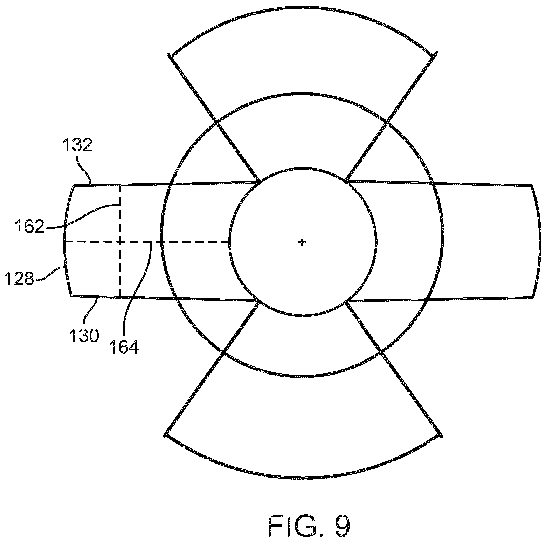

FIG. 9 shows another example of substantially parallel side walls 130, 132, in which the side walls 130, 132 converge slightly. In FIG. 9 the first and second side walls 130, 132 extend to the outer wall 128 along an axis 164 and are separated by a width 162, with the width 162 varying by less than 10% along the axis 164. The width 162 becomes smaller as the side walls 130, 132 extend to the outer wall 128. The first and second side walls 130, 132 in this example are straight, and converge by less than five degrees.

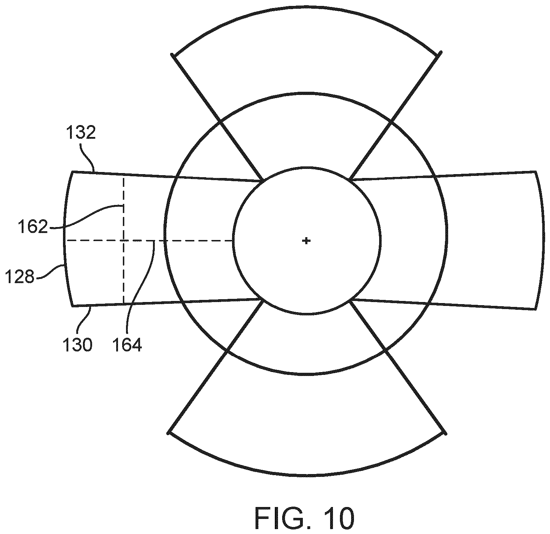

FIG. 10 shows an example of substantially parallel side walls 130, 132 in which the side walls 130, 132 diverge slightly. In FIG. 10 the first and second side walls 130, 132 extend to the outer wall 128 along an axis 164 and are separated by a width 162, with the width 162 varying by less than 10% along the axis 164. The width 162 becomes larger as the side walls 130, 132 extend to the outer wall 128. The first and second side walls 130, 132 in this example are straight, and diverge by less than five degrees.

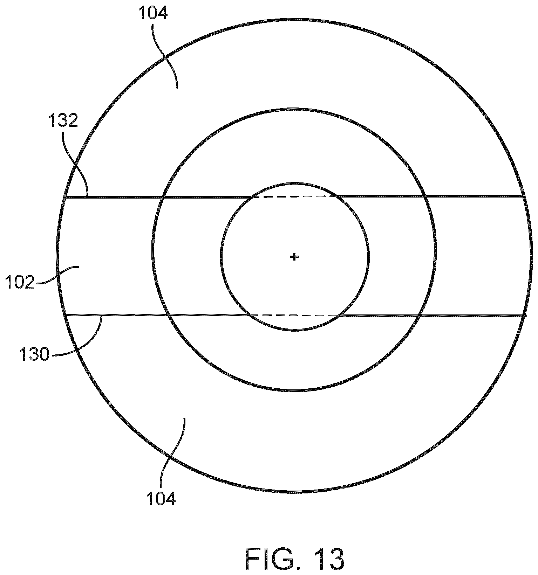

As discussed above, in at least some implementations the separation chambers 102 may be fluidly connected to the hydrocarbon vapor collecting chambers 104 by openings 134 (e.g. openings 134 shown in FIG. 3). In some instances, the side walls 130, 132 of the separation chambers 102 may also form the side walls of the hydrocarbon vapor collecting chambers 104 (see, e.g., FIG. 4) and the opening 134 fluidly connecting the two chambers may be an opening in one of those side walls 130, 132. In other instances, such as shown in FIG. 7, the side walls (e.g. side wall 130) of the separation chambers 102 are spaced apart from the hydrocarbon vapor collecting chambers 104, and the opening is a conduit 160 extending between the two chambers. FIG. 13 shows an example in which the separation chambers 102 includes side walls 130, 132 that are substantially parallel and that also define side walls of the hydrocarbon vapor collecting chambers 104, such that the openings 134 (not shown) are openings in those side walls 130, 132.

Separation chambers 102 with substantially parallel side walls 130, 132 may be incorporated into riser reactor separation systems 100 that incorporate baffles 112 such as shown in FIGS. 2-6 and 11-12. In other implementations, reactor separation systems 100 may incorporate separation chambers 102 with substantially parallel side walls 130, 132 without also incorporating baffles 112. In still other implementations, reactor separation systems 100 may incorporate baffles 112 such as shown in FIGS. 2-6 and 11-12 without also incorporating separation chambers 102 with substantially parallel side walls 130, 132.

### Method of Separating Catalyst Particles From Hydrocarbon Vapors

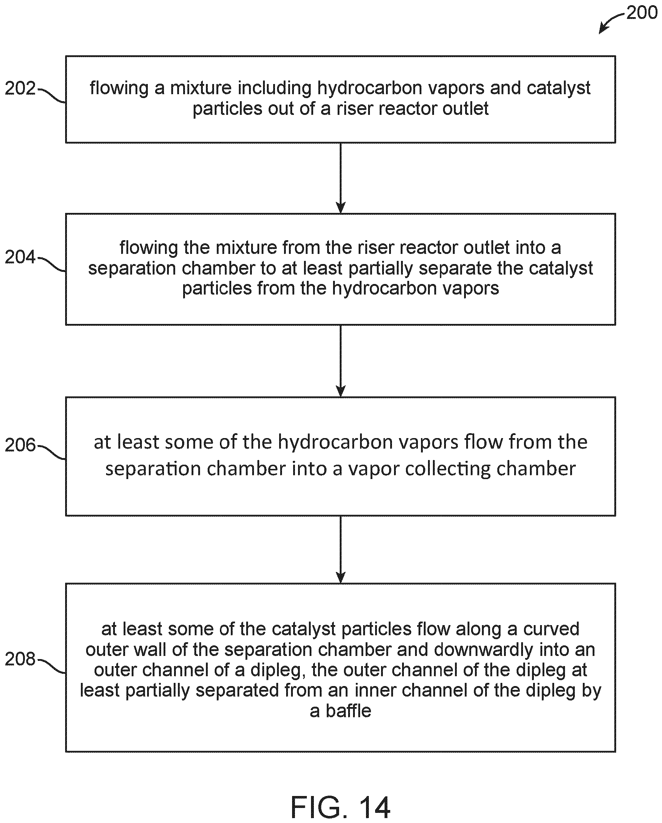

FIG. 14 shows an example of a method 200 of separating catalyst particles from hydrocarbon vapors in a riser reactor. The method 200 of FIG. 14 may use one of the riser reactor separation systems described above or may use a different riser reactor separation system.

The method 200 may include at step 202 flowing a mixture including hydrocarbon vapors and catalyst particles to a riser reactor outlet (e.g. a riser reactor outlet 22 from previously discussed examples). At step 204 the mixture including hydrocarbon vapors and catalyst particles is flowed from the riser reactor outlet into a separation chamber (e.g. a separation chamber 102 from previously discussed examples) to at least partially separate the catalyst particles from the hydrocarbon vapors. At step 206 at least some of the hydrocarbon vapors flow from the separation chamber into a vapor collecting chamber. At step 208 (and in this example at the same time as step 206) at least some of the catalyst particles flow along a curved outer wall of the separation chamber (e.g. a separation chamber outer wall 128 from previously discussed examples) and downwardly into an outer channel of a dipleg (e.g. a dipleg outer channel 116 from previously discussed examples), the outer channel of the dipleg at least partially separated from an inner channel of the dipleg by a baffle (e.g. a baffle 112 from previously discussed examples).

In the example of FIG. 14 the catalyst particles flow through the outer channel of the dipleg with a catalyst flux between 50 and 200 pounds per square foot per second, or with a catalyst flux between 100 and 150 pounds per square foot per second. In the example of FIG. 14 the mixture including hydrocarbon vapors and catalyst particles flows in the separation chamber towards the curved outer wall of the separation chamber at a substantially constant velocity between two substantially parallel side walls of the separation chamber (e.g. varies by less than 5% as the mixture flows from the riser reactor outlet to the curved outer wall, or less than 3%, or less than 1%).

Additions, deletions, substitutions, alternations, and other modifications may be made to the systems and methods described above without departing from the scope or the spirit of the following claimed inventions.

## Claims

1. A riser reactor separation system for separating catalyst particles from hydrocarbon vapors, the riser reactor separation system comprising:
(a) a separation chamber extending outwardly from and in fluid communication with a riser outlet of a riser reactor;
(b) a hydrocarbon vapor collecting chamber in fluid communication with the separation chamber;
(c) a hydrocarbon vapor outlet in fluid communication with the hydrocarbon vapor collecting chamber;
(d) a dipleg extending downwardly from the separation chamber towards a catalyst receiving volume, the dipleg comprising a dipleg outer wall; and
(e) a baffle spaced apart from and extending along the dipleg outer wall, at least partially separating the dipleg into an outer channel and an inner channel.

2. The riser separation system of claim 1 wherein the baffle comprises an upper end located in the separation chamber, wherein the separation chamber comprises an outer wall, wherein the outer wall of the separation chamber and the outer channel of the dipleg define a continuous flow path.

3. The riser separation system of claim 2 further comprising a deflector located in the separation chamber and extending outwardly away from the riser outlet, wherein the upper end of the baffle is lower than the deflector; optionally, further comprising an opening fluidly connecting the separation chamber and the hydrocarbon vapor collecting chamber, wherein the upper end of the baffle is lower than the opening; and/or optionally, wherein the deflector extends outwardly away from the riser outlet to an outermost edge of the deflector, wherein the upper end of the baffle is spaced outward relative to the outermost edge of the deflector.

4. The riser separation system of claim 1 wherein the dipleg defines a length extending downwardly from the separation chamber towards the catalyst receiving volume, wherein the baffle extends along at least 80% of the length of the dipleg; optionally, wherein the dipleg comprises an inner wall and an outer wall, wherein the outer wall of the dipleg is continuous with the outer wall of the separation chamber, wherein the baffle is located closer to the outer wall of the dipleg than the inner wall; further optionally, wherein the baffle is parallel to the outer wall.

5. The riser separation system of claim 1 wherein the dipleg comprises a lower end, wherein the riser separation system further comprises a guard at least partially obstructing the lower end of the dipleg.

6. The riser separation system of claim 1 wherein the separation chamber comprises an outer wall, a first side wall extending to the outer wall, and a second side wall extending to the outer wall, wherein the first and second side walls of the separation chamber extend substantially parallel relative to one another.

7. The riser separation system of claim 1 wherein the baffle includes one or more openings between the outer and inner chambers.

8. A riser separation system for separating catalyst particles from hydrocarbon vapors, the riser separation system comprising:
(a) a separation chamber extending outwardly from a riser outlet of a riser reactor;
(b) a hydrocarbon vapor collecting chamber in fluid communication with the separation chamber, the hydrocarbon vapor collecting chamber in fluid communication with a hydrocarbon vapor outlet;
(c) a dipleg extending downwardly from the separation chamber towards a catalyst receiving volume; and
(d) wherein the separation chamber comprises an outer wall, a first side wall extending to the outer wall, and a second side wall extending to the outer wall, wherein the first and second side walls of the separation chamber extend substantially parallel relative to one another.

9. The riser separation system of claim 8 wherein the first and second side walls extend to the outer wall along an axis and are separated by a width, wherein the width varies by less than 10% along the axis; and /or wherein the first and second side walls are straight, wherein the first and second side walls do not diverge or converge by more than five degrees.

10. The riser separation system of claim 8 wherein the riser reactor extends upwardly along a central axis, wherein the first side wall of the separation chamber lies in a first plane, wherein the second side wall of the separation chamber lies in a second plane, wherein the central axis is located between and does not intersect the first and second planes.

11. The riser separation system of claim 8 further comprising a baffle spaced apart from and extending along an outer wall of the dipleg, the baffle at least partially separating the dipleg into an outer channel and an inner channel.

12. A method of separating catalyst particles from hydrocarbon vapors comprising:
(a) flowing a mixture comprising hydrocarbon vapors and catalyst particles to a riser reactor outlet;
(b) flowing the mixture comprising hydrocarbon vapors and catalyst particles from the riser reactor outlet into a separation chamber to at least partially separate the catalyst particles from the hydrocarbon vapors;
(c) wherein at least some of the hydrocarbon vapors flow from the separation chamber into a vapor collecting chamber;
(d) wherein at least some of the catalyst particles flow along a curved outer wall of the separation chamber and downwardly into an outer channel of a dipleg, the outer channel of the dipleg at least partially separated from an inner channel of the dipleg by a baffle.

13. The method of claim 12 wherein the catalyst particles flow through the outer channel of the dipleg with a catalyst flux between 50 and 200 pounds per square foot per second; optionally, wherein the catalyst particles flow through the outer channel of the dipleg with a catalyst flux between 100 and 150 pounds per square foot per second.

14. The method of claim 12 wherein the mixture comprising hydrocarbon vapors and catalyst particles flows in the separation chamber towards the curved outer wall of the separation chamber at a substantially constant velocity between two substantially parallel side walls of the separation chamber.

15. The method of claim 12 wherein the mixture comprising hydrocarbon vapors and catalyst particles flows from the riser reactor outlet towards the curved outer wall of the separation chamber at a substantially constant velocity that varies by less than 5%.

## Amended claims

### Amended claims in accordance with Rule 137(2) EPC.

1. A riser reactor separation system (100) for separating catalyst particles from hydrocarbon vapors, the riser reactor separation system comprising:
(a) a separation chamber (102) extending outwardly from and in fluid communication with a riser outlet (22) of a riser reactor (10) wherein the separation chamber is configured to receive a mixture from the riser outlet and separate catalyst particles from hydrocarbon vapors using both inertial and centrifugal forces;
(b) a hydrocarbon vapor collecting chamber (104) in fluid communication with the separation chamber;
(c) a hydrocarbon vapor outlet (106) in fluid communication with the hydrocarbon vapor collecting chamber;
(d) a dipleg (108) extending downwardly from the separation chamber towards a catalyst receiving volume (16), the dipleg comprising a dipleg outer wall (114); and
(e) a baffle (112) spaced apart from and extending along the dipleg outer wall, at least partially separating the dipleg into an outer channel (116) and an inner channel (118).

2. The riser separation system (100) of claim 1 wherein the baffle (112) comprises an upper end (120) located in the separation chamber (102), wherein the separation chamber comprises an outer wall (128), wherein the outer wall of the separation chamber and the outer channel (116) of the dipleg (108) define a continuous flow path.

3. The riser separation system (100) of claim 2 further comprising a deflector (136) located in the separation chamber (102) and extending outwardly away from the riser outlet (22), wherein the upper end (120) of the baffle (112) is lower than the deflector; optionally, further comprising an opening (134) fluidly connecting the separation chamber and the hydrocarbon vapor collecting chamber (104), wherein the upper end of the baffle is lower than the opening.

4. The riser separation system (100) of claim 3 wherein the deflector extends outwardly away from the riser outlet (22) to an outermost edge (148) of the deflector, wherein the upper end (120) of the baffle (112) is spaced outward relative to the outermost edge of the deflector.

5. The riser separation system (100) of claim 1 wherein the dipleg (108) defines a length (150) extending downwardly from the separation chamber (102) towards the catalyst receiving volume, wherein the baffle (112) extends along at least 80% of the length of the dipleg.

6. The riser separation system (100) of claim 5 wherein the dipleg (108) comprises an inner wall (152) and the outer wall (114), wherein the outer wall of the dipleg is continuous with the outer wall of the separation chamber (102), wherein the baffle (112) is located closer to the outer wall of the dipleg than the inner wall.

7. The riser separation system (100) of claim 6 wherein the baffle (112) is parallel to the outer wall (114) of the dipleg (108).

8. The riser separation system (100) of claim 1 wherein the dipleg (108) comprises a lower end (124), wherein the riser separation system further comprises a guard (158) at least partially obstructing the lower end of the dipleg.

9. The riser separation system (100) of claim 1 wherein the separation chamber (102) comprises an outer wall (128), a first side wall (130) extending to the outer wall, and a second side wall (132) extending to the outer wall, wherein the first and second side walls of the separation chamber extend substantially parallel relative to one another.

10. The riser separation system (100) of claim 1 wherein the baffle (112) includes one or more openings (168) between the outer (116) and inner (118) channels.

11. A method (200) of separating catalyst particles from hydrocarbon vapors comprising:
(a) flowing (202) a mixture comprising hydrocarbon vapors and catalyst particles to a riser reactor outlet (22);
(b) flowing (204) the mixture comprising hydrocarbon vapors and catalyst particles from the riser reactor outlet into a separation chamber (102) to at least partially separate the catalyst particles from the hydrocarbon vapors using both inertial and centrifugal forces;
(c) wherein at least some of the hydrocarbon vapors flow (206) from the separation chamber into a vapor collecting chamber (104);
(d) wherein at least some of the catalyst particles flow (208) along a curved outer wall (128) of the separation chamber and downwardly into an outer channel (116) of a dipleg (108), the outer channel of the dipleg at least partially separated from an inner channel (118) of the dipleg by a baffle (112).

12. The method (200) of claim 11 wherein the baffle (112) is located closer to the outer wall (114) of the dipleg (108) than to an inner wall (152) of the dipleg to cause the catalyst particles to flow through the outer channel (116) of the dipleg (108) with a catalyst flux between 2394 and 9576 Pa/s (between 50 and 200 pounds per square foot per second).

13. The method (200) of claim 12 wherein the catalyst particles are caused to flow through the outer channel (116) of the dipleg with a catalyst flux between 4788 and 7182 Pa/s (between 100 and 150 pounds per square foot per second).

14. The method (200) of claim 11 wherein the mixture comprising hydrocarbon vapors and catalyst particles flows in the separation chamber (102) towards the curved outer (128) wall of the separation chamber at a substantially constant velocity between two substantially parallel side walls of the separation chamber.

15. The method (200) of claim 11 wherein the mixture comprising hydrocarbon vapors and catalyst particles flows from the riser reactor outlet (22) along substantially parallel side walls towards the curved outer wall (128) of the separation chamber (102) such that the mixture comprising hydrocarbon vapors and catalyst particles flow at a substantially constant velocity that varies by less than 5%.
